# EUROPÄISCHE PATENTSCHRIFT

(11) **EP 2 028 738 B1**
(45) Veröffentlichungstag und Bekanntmachung des Hinweises auf die Patenterteilung: **13.04.2016**
(21) Anmeldenummer: 08014575.8
(22) Anmeldetag: 16.08.2008
(51) Int. Cl.: H02G 3/04

(54) **ÜBERBRÜCKUNGSKLAMMER ZUR SICHERUNG VON KABELN UND LEITUNGEN IN KABELFÜHRUNGSKANÄLEN**
BRIDGING CLAMP FOR SECURING CABLES AND LEADS IN CABLE GUIDE CHANNELS
BRIDE D'ENJAMBEMENT DESTINÉE À LA SÉCURISATION DE CÂBLES ET DE CONDUITES DANS DES CANAUX DE GUIDAGE DE CÂBLES

(30) Priorität: 21.08.2007 DE 202007011686 U
(43) Veröffentlichungstag der Anmeldung: 25.02.2009
(73) Patentinhaber: Tehalit GmbH, 67716 Heltersberg (DE)
(72) Erfinder: Schwarz, Jürgen, 67705 Trippstadt (DE)
(74) Vertreter: Nuss, Laurent

(56) Entgegenhaltungen:
- EP-A- 0 742 625
- DE-A1- 4 103 707
- DE-U- 7 516 980
- DE-U1- 29 702 382
- DE-U1- 29 911 436

## Beschreibung

Die vorliegende Erfindung betrifft eine Überbrückungsklammer zur Sicherung von Kabeln und Leitungen in Kabelführungskanälen gemäß dem Oberbegriff nach Anspruch 1.

Bei Kabelführungskanälen werden die Kabel und Leitungen in das Unterteil des Kanals gelegt und anschließend wird ein Deckel auf das Unterteil aufgerastet. Da in solchen Kabelführungskanälen in der Regel eine größere Anzahl von Kabel und Leitungen verlaufen, ist es insbesondere bei einer wandseitigen oder deckenseitigen Montage des Kanals erforderlich, ein Herausfallen der Kabel und Leitungen aus dem Kanal zu vermeiden, solange der Deckel noch nicht auf das Unterteil des Kanals aufgesetzt ist. Hierfür werden gewöhnlicherweise beidseitig mit dem Unterteil verrastbare Überbrückungsklammern verwendet, die abschnittsweise auf das Unterteil des Kabelkanals über dessen Länge aufgesetzt werden und ein Herausfallen der Kabel und Leitungen verhindern. Solche Überbrückungsklammern bleiben in der Regel auch nach der Montage des Deckels an dem Unterteil angebracht, so dass beispielsweise auch zu einem späteren Zeitpunkt Kabel ausgetauscht oder neue Kabel eingesetzt werden können, ohne dass beim Abnehmen des Deckels die Leitungen aufgrund ihres Eigengewichtes aus dem Kanal herausfallen.

Überbrückungsklammern der zuvor genannten Art sind beispielsweise aus dem deutschen Gebrauchsmuster 7008943 bekannt, bei dem gesonderte Zwischenstücke vorgesehen sind, auf die eine Überbrückungsklammer in zur Kanallängsrichtung paralleler Orientierung aufgesteckt werden. Bei dieser Ausführungsform werden sowohl Zwischenstücke als auch Überbrückungsklammern benötigt, was bei der Montage umständlich ist. Weitere Überbrückungsklammern zeigen auch die EP 0742625 A, DE 4103707 A1 und DE 7516980 U.

In der gattungsgemäßen DE 297 02 382 wird eine Halteklammer beschrieben, die einen symmetrischen Aufbau mit einem Rastprofil besitzt, bei der in der wirksamen Lage ein Haltestift der Haltezungen in eine der Durchbrechungen des Flansches am Kanalunterteil greift. Eine seitliche Befestigung der Klammer zum Einlegen von Kabeln oder Leitungen ist nicht vorgesehen. Die Klammer muss hierzu vollständig aus dem Kanalunterteil herausgenommen werden. Ferner ist auch eine Schwenkbarkeit der Klammer nicht vorgesehen.

In der DE 299 11 426 U1 wird ein Leitungsführungskanal mit einer Halteklammer beschrieben, die auch seitlich an Frontleisten des Kanalunterteils befestigt werden kann.

In dieser Lager- und Transportstellung lässt sich die Klammer auf der Frontleiste nach rechts und links verschieben. Aus dieser Position wird die Klammer horizontal zur gegenüberliegenden Seite des Kanals geschwenkt. Soll die Kammer jedoch vertikal nach oben geschwenkt werden, muss hierfür die Seitenwand des Kanalunterteils leicht verformt werden, was unbefriedigend ist.

In der DE 3335884 C2 wird eine Überbrückungsklammer vorgeschlagen, die an beiden Seiten hakenförmige Eingriffsprofile aufweist, die mit Deckelhalteprofilen von Kabelführungskanälen kooperieren. Für das Einlegen von Kabeln wird zunächst eine Seite der Überbrückungsklammer in die Deckelhalteprofile eines Kabelführungskanals eingerastet. Das andere Ende bleibt gelöst, so dass von dieser Seite die Kabel und Leitungen eingesetzt werden können. Anschließend wird die Klammer auch an der anderen Seite in das Deckelhalteprofil eingerastet. Durch die beidseitige Rastverbindung ist ein einfaches Lösen der Klammer, beispielsweise für ein nachträgliches Einlegen von Kabeln für den Installateur jedoch mit einem gewissen Kraftaufwand verbunden, da die Rastverbindung zunächst gelöst werden muss. Ferner besteht bei großen Kabellasten die Gefahr, dass sich die Klammer verschiebt.

Der vorliegenden Erfindung liegt daher die Aufgabe zugrunde, eine verbesserte Überbrückungsklammer für Kabelführungskanäle bereit zu stellen, die in Schwenkstellung entlang des Kanals verschiebbar und in Verriegelungsposition fest mit dem Kabelkanalunterteil fixierbar ist.

Diese Aufgabe wird gelöst durch eine Überbrückungsklammer gemäß Anspruch 1.

Die erfindungsgemäße Überbrückungsklammer wird zunächst auf einer Seite auf das Unterteil eines Kabelführungskanals in dafür vorgesehene Randprofile des Kabelkanals eingesetzt. In der Schwenkstellung ist die Klammer entlang des Kanals verschiebbar und kann so durch den Monteur in die erforderliche Montageposition gebracht werden. Auf diese Weise erhält man gegenüber bekannten Klammern, die gar nicht oder nur schwer verschiebbar sind, einen wesentlichen Installationszeitvorteil bei der Montage. Durch das Herunterdrücken der Klammer greift ein am Fußende der Klammer ausgebildeter Riegel in eine am Unterteil des Kanals ausgeformte Aussparung. Die Aussparungen sind an einem Randprofil, vorzugsweise direkt am Deckelhalteprofil oder - alternativ - an einer zusätzlich am Unterteil ausgebildeten Leiste in etwa regelmäßigen Abständen eingebracht. Die Aussparungen sind vorzugsweise an einem am Randprofil ausgeformten und in Längsrichtung verlaufenden Steg ausgeformt, so dass der Riegel des Rastprofils entweder von unten oder von oben in die jeweilige Aussparung des Stegs greifen kann. In einer Ausführungsform ist der Riegel an einem unteren Schenkel des Rastprofils ausgebildet und gleitet beim Einsetzen und verriegeln der Klammer von unten in die Aussparung. Bei einer weiteren Ausführungsform ist der Riegel an einem oberen Schenkel des Rastprofils ausgebildet und wird beim Herunterdrücken der Klammer von oben in die Aussparung geführt. Durch das Eingreifen des Riegels in die Aussparung entsteht eine Rastverbindung; ein längsseitiges Verrutschen der Klammer entlang des Kanals wird im verriegeltem Zustand vermieden.

Die erfindungsgemäße Überbrückungsklammer besteht aus einem leistenförmigen Basiskörper an dessen Fußende ein klauenförmiges Rastprofil mit zwei Schenkeln ausgebildet ist. Das Rastprofil wird von einem unteren Schenkel mit vorzugsweise zwei eckständig ausgeformten Nasen, die unter die Randprofile des Kabelführungskanals greifen und einem oberen Schenkel gebildet. Damit die Überbrückungsklammer beim Überführen in die Verriegelungsposition besser über die Schenkelaußenseite des Randprofils geführt werden kann, sind die Nasen zum Kanalrand hin vorzugsweise abgeschrägt. In dem Schlitz zwischen dem oberen und unteren Schenkel des Fußteils wird das Randprofil des Kanalunterteils geführt. Durch die an dem unteren Schenkel angebrachten und von unten in die U-förmigen Randprofile greifenden Nasen wird ein Herausgleiten der Klammer aus dem Kanal verhindert.

Die Klammer wird für die Montage zunächst schräg auf das Randprofil des Kanals aufgesetzt und kann dann durch leichtes Verschieben und Herunterdrücken mit dem Unterteil verrastet werden, indem der am unteren oder oberen Schenkel ausgebildete Riegel in die entsprechende Aussparung des Unterteils greift. Dadurch wird ein seitliches Verrutschen der Klammer vermieden.

Bei einer Ausführungsform der beidseitig verrastbaren Überbrückungsklammer ist das Rastprofil am Kopf- und am Fußende der Klammer ausgebildet. Vorzugsweise sind bei dieser Ausführungsform beim Kanal die Aussparungen beidseitig symmetrisch am Unterteil angeordnet.

Bei einer weiteren Ausführungsform befindet sich am Kopfende anstatt eines Rastprofils ein Halteprofil, das eine leistenförmige Erhebung am Schenkel umfasst, die zur Führung der Überbrückungsklammer in die Halteprofile des Unterteils dient.

Zum Einlegen von Kabel und Leitungen wir die Überbrückungsklammer zunächst am Fußende mit dem Rastprofil am Kanalunterteil verbunden. Die Klammer befindet sich bei dieser Position in Schwenkstellung und schaut schräg nach oben über den Kanalrand. In dieser Position können die Kabel und Leitungen von oben oder seitlich in den Kabelführungskanal eingelegt werden. Nach erfolgtem Einlegen der Kabel und Leitungen wird die Klammer nach unten gedrückt, so dass das Rastprofil mit dem Unterteil verrastet. Auf der Kopfseite rastet der am unteren Schenkel ausgebildete Zahn in die entsprechende Aussparung des Kanalunterteils. Für den Fachmann ist ersichtlich, dass die Greifelemente (Riegel des Rastprofils bzw. Zahn am Halteprofil) entweder am oberen oder unteren Schenkel der Klammer befinden können und entweder von oben oder von unten in die jeweilige am Unterteil angebrachte Aussparung greifen können.

Gegenüber den herkömmlichen und bekannten Lösungen hat die erfindungsgemäße Überbrückungsklammer den Vorteil, dass ein Verschieben der Klammer auch bei schweren Kabellasten vermieden wird.

In einer weiteren bevorzugten Ausführungsform besitzt die erfindungsgemäße Überbrückungsklammer eine seitlich am Basiskörper ausgebildete Nut. In dieser kann die Überbrückungsklammer in Längsrichtung mit dem Unterteil befestigt werden, so dass das Kanalinnenteil für das Einlegen der Kabel und Leitungen offen ist. Die Klammern können auf diese Weise über die gesamte Kanallänge angebracht werden, so dass der Monteur schrittweise die Kabel in den Kanal einlegen kann, um anschließend die Klammern von der Gebrauchsposition in die Verriegelungsposition zu bringen. Hierzu wird die Klammer zunächst durch eine seitliche Drehung in Schwenkstellung gebracht. In dieser Position kann die Klammer durch einfaches Verschieben entlang des Kanals in die gewünschte Montageposition gebracht werden. Durch Herunterdrücken der Klammer, greift der am Rastprofil ausgebildete Riegel in die am Leistenprofil eingebrachte Aussparung. Auf der anderen Seite der Klammer greift das Halteprofil unter das Deckelhalteprofil des Kanalunterteils.

Im Folgenden wird die Erfindung anhand der Zeichnungen näher erläutert.

Es zeigen
- Fig. 1: eine isometrische Darstellung einer erfindungsgemäßen Überbrückungsklammer in Längsbefestigung an einem Kanalunterteil,
- Fig. 2: eine isometrische Darstellung der Überbrückungsklammer in Schwenkstellung,
- Fig. 3: die in Fig. 2 gezeigte Überbrückungsklammer in Vorderansicht,
- Fig. 4: die erfindungsgemäße Überbrückungsklammer in Verriegelungsposition,
- Fig. 5: eine weitere Ausführungsform der erfindungsgemäßen Überbrückungsklammer in Schwenkstellung und
- Fig. 6: die in Fig. 5 gezeigte Überbrückungsklammer in Vorderansicht.

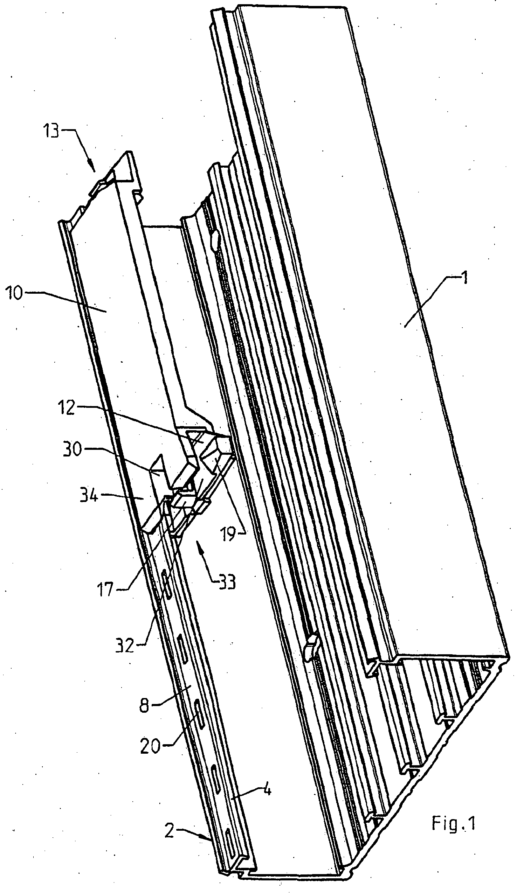

In Fig. 1 erkennt man ein Unterteil 1 eines Kabelführungskanals mit seitlichen Deckelhalteprofilen 2 und daran ausgebildeten Randprofilen 4. Die erfindungsgemäße Überbrückungsklammer wird entweder direkt an die Deckelhalteprofile 2 oder an die gegebenenfalls dazu ausgeformten Randprofile 4 befestigt. Die Randprofile 4 haben Aussparungen 20, die vorzugsweise in regelmäßigen Abständen beidseitig am Unterteil 1 ausgebildet sind und zur Aufnahme des Rastprofils 33 der Überbrückungsklammer dienen. Vorzugsweise ist das Randprofil 4 U-förmig.

Die Überbrückungsklammer selbst besteht aus einem Basiskörper 10 mit einem fußseitig ausgebildeten Rastprofil 33 und einem kopfseitig ausgebildeten Halteprofil 13. Die Verrastung der Klammer mit dem Unterteil 1 erfolgt mit dem Rastprofil 33. Die Fußseite besteht aus einem oberen Schenkel 34 und einem unteren Schenkel 32, die einen Schlitz 12 bilden, durch den das Randprofil 4 des Unterteils 1 geführt wird. In der abgebildeten Ausführungsform ist an dem unteren Schenkel 32 ein Riegel 17 ausgebildet, der nach oben ragt. Zum Einlegen der Kabel und Leitungen ist die Überbrückungsklammer über eine seitliche Nut mit dem Randprofil 4 am Unterteil befestigt. Die Kabel und Leitungen können so von oben oder von der Seite bequem in den Kanal eingelegt werden. Nach dem Einlegen der Kabel und Leitungen wird die Klammer seitlich gedreht, so dass das Rastprofil 33 über den Schlitz 12 in das Randprofil 4 greift. Vorzugsweise ist an dem unteren Schenkel 32 wenigstens eine Nase 19 ausgebildet, vorzugsweise zwei Nasen, die mit dem bevorzugten U-förmigen Randprofil 4 kooperieren. Ferner erkennt man eine Ausnehmung 30 am oberen Schenkel 34. Die Aussparungen 20 sind vorzugsweise an der Oberseite eines Stegs 8 des Randprofils 4 eingebracht.

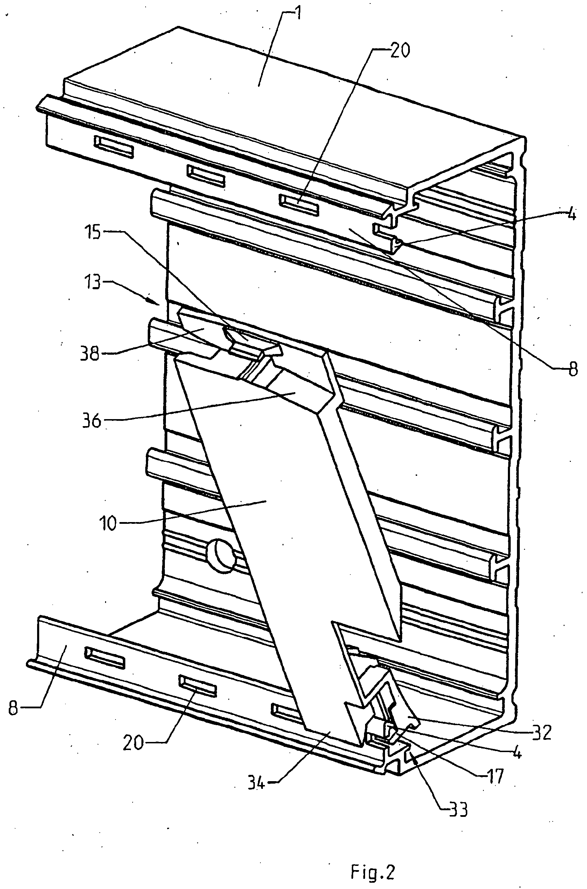

In Fig. 2 erkennt man die erfindungsgemäße Überbrückungsklammer in Schwenkstellung. Der Riegel 17 des Rastprofils 33 am Fußende greift in eine Aussparung 20 des Stegs 8 des Randprofils 4. Vorzugsweise ist der Riegel 17 nach außen abgeschrägt, um das Eingreifen des Riegels 17 in die Aussparung 20 zu erleichtern. Durch die U-förmige Ausgestaltung des Randprofils 4 wird der Riegel 17 beim Herunterdrücken der Klammer in die Aussparung 20 geführt und verrastet auf diese Weise mit dem Unterteil 1.

Auf der Kopfseite erkennt man das Halteprofil 13 mit dem Schenkel 38 und dem Zahn 15. Bei einer beidseitigen Verrastung greift der Zahn 15 auf der gegenüberliegenden Seite des Unterteils 1 in eine Aussparung 20. Der nach unten geneigte Schenkel des Randprofils 4 wird in einer zwischen dem Zahn 15 und der Kante 36 des Basiskörpers 10 ausgebildeten Führungsfurche geführt, bis die Klammer unter das Randprofil 4 greift.

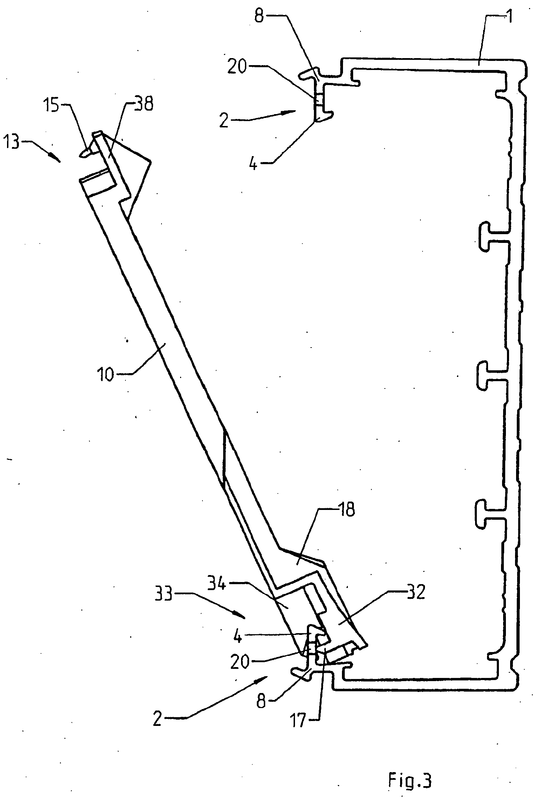

In Fig. 3 erkennt man dieselbe Klammer in Vorderansicht. In der Schwenkstellung ist die Klammer entlang des Kabelkanals verschiebbar. Erst nach Herunterdrücken der Klammer verrastet das Rastprofil 33 mit dem Unterteil 1. Bei weiterem Herunterdrücken verrastet dann auch das Halteprofil 13. Deutlich erkennt man wie der Riegel 17 am Rastprofil 33 bzw. der Zahn 15 am Halteprofil 13 von unten in die entsprechenden Aussparungen 20 des Randprofils 4 greifen. Der Steg 8 verläuft in Längsrichtung des Kabelkanals.

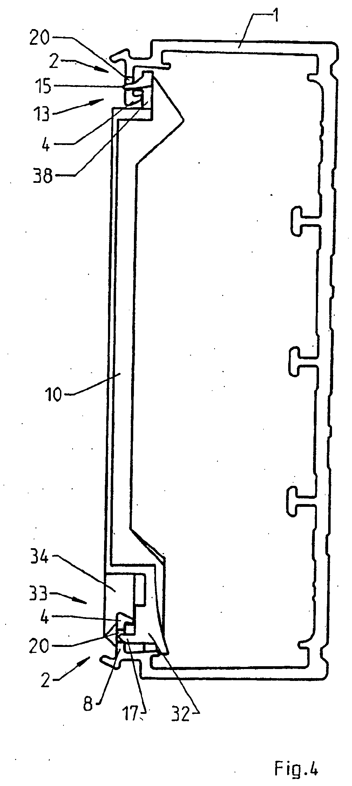

In Fig. 4 ist schließlich die Überbrückungsklammer in Verriegelungsposition gezeigt. Bei dieser Ausführungsform ist die Klammer beidseitig mit dem Unterteil 1 verrastet. Der Riegel 17 des fußseitigen Rastprofils 33 und der Zahn 15 des kopfseitigen Halteprofils 13 greifen in die entsprechenden Aussparungen 20 des Randprofils 4. Deutlich erkennt man auch wie sich der nach unten geneigte Schenkel des Randprofils 4 gegen die unteren Schenkel 32, 38 des Rastprofils 33 bzw. Halteprofils 13 abstützen. In dieser Position ist die Klammer fest mit dem Unterteil 1 verrastet und nicht mehr verschiebbar.

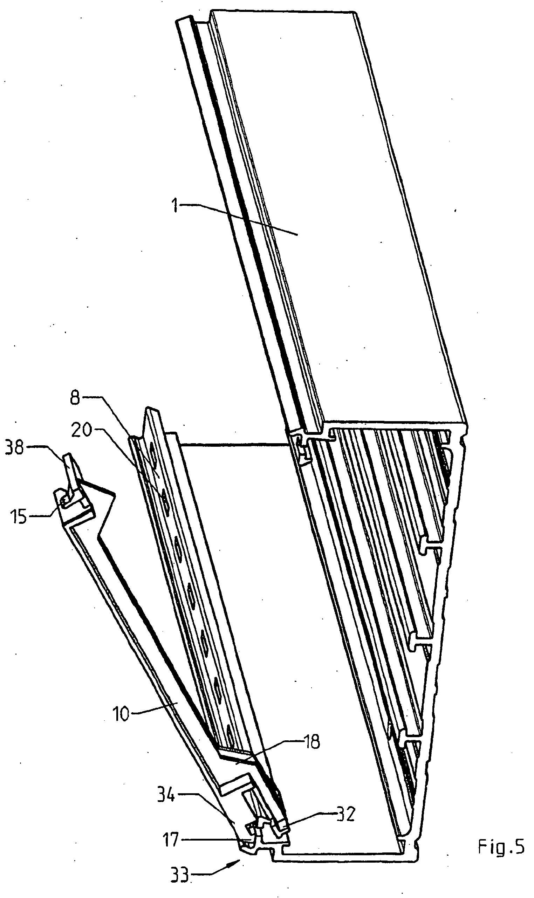

In Fig. 5 ist eine alternative Ausführungsform gezeigt, bei der der Eingriff in die Aussparung 20 des Unterteils 1 nicht von unten sondern von oben erfolgt. Hierzu ist der Riegel 17 des Rastprofils 33 am oberen Schenkel 34 ausgebildet. Anstatt von unten greift der Riegel 17 nun von oben in die entsprechende Aussparung 20 des Unterteils 1.

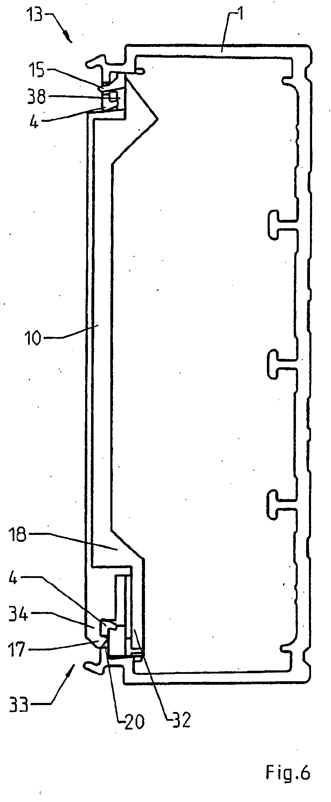

In Fig. 6 erkennt man die in Fig. 5 gezeigte Ausführungsform in Verriegelungsposition. Am fußseitigen Rastprofil 33 greift der Riegel 17 von oben in die Aussparung 20 und auch hier stützt sich der untere Schenkel 32 gegen das Randprofil 4 und damit dem Unterteil 1 ab. Das Rastprofil 13 ist bei dieser Ausführungsform wie zuvor beschrieben ausgestaltet.

Der Fachmann wird erkennen, dass das Halteprofil 13 am Kopfende auch wie das Rastprofil 33 am Fußende der Klammer ausgestaltet sein kann. In diesem Fall würden sowohl der Riegel 17 als auch der Zahn 15 von oben in die entsprechenden Aussparungen 20 greifen.

Die erfindungsgemäße Überbrückungsklammer bietet gegenüber den herkömmlichen Klammern eine größtmögliche Flexibilität für den Monteur bei der Installation. Die Klammer ist entlang des Kabelkanals in Schwenkstellung beidseitig verschiebbar und durch einfaches Herunterdrücken mit dem Kabelkanalunterteil verrastbar. Dadurch ist sie selbst bei schweren Kabellasten sicher mit dem Unterteil fixiert und ist unverschiebbar.

## Patentansprüche

1. Überbrückungsklammer zur Sicherung von Kabeln und Leitungen in Kabelführungskanälen, umfassend
- einen Basiskörper (10),
- ein an der Fußseite des Basiskörpers (10) ausgebildetes Rastprofil (33) mit einem darin eingebrachten Schlitz (12) zur Befestigung der Klammer mit einem Unterteil (1) eines Kabelführungskanals, wobei das Rastprofil (33) von einem unteren Schenkel (32) und einem oberen Schenkel (34) des Basiskörpers (10) gebildet wird,
- ein an der Kopfseite des Basiskörpers (10) ausgebildetes Halteprofil (13) zum Abstützen der Klammer gegen das Unterteil (1) des Kabelführungskanals,
- ein entweder am oberen Schenkel (34) oder am unteren Schenkel (32) des Rastprofils (33) ausgebildeter Riegel (17), der mit einer am Unterteil (1) ausgebildeten Aussparung (20) kooperiert, wobei der Riegel (17) entweder von unten oder von oben in die Aussparung (20) greift und die Aussparung (20) an einem Randprofil (4) des Unterteils (1) ausgebildet ist,
- die Überbrückungsklammer an ihrer Längsseite eine Nut aufweist, damit die Klammer seitlich mit dem Randprofil (4) des Unterteils (1) befestigbar ist
**dadurch gekennzeichnet, dass die** Klammer in der Schwenkstellung entlang des Kabelkanals in die Montageposition verschiebbar ist und beim Herunterdrücken der Klammer in die Rasstellung der Riegel (17) des fußseitigen Rastprofils (33) in eine Aussparung (20) des Stegs (8) des Randprofils (4) greift und dass zur beidseitigen Verrastung in der Verriegelungsposition ein am Halteprofil (13) ausgebildeten Zahn (15) auf der gegenüberliegenden Seite des Unterteils (1) in eine Aussparung (20) greift, und dass das Halteprofil (13) mit dem Randprofil (4) des Unterteils (1) kooperiert.

2. Überbrückungsklammer nach Anspruch 1, **dadurch gekennzeichnet, dass** sich der Riegel (17) am oberen Schenkel (34) des Basiskörpers (10) befindet und von oben in die Aussparung (20) des Unterteils (1) greift.

3. Überbrückungsklammer nach einem der Ansprüche 1 oder 2, **dadurch gekennzeichnet, dass** sich der Riegel (17) am unteren Schenkel (32) des Basiskörpers (10) befindet und von unten in die Aussparung (20) des Unterteils (1) greift.

4. Überbrückungsklammer nach einem der vorhergehenden Ansprüche, **dadurch gekennzeichnet, dass** die Aussparungen (20) an den Deckelhalteprofilen (2) oder an einem Steg (8) des Randprofils (4) eingebracht sind.

5. Überbrückungsklammer nach einem der vorhergehenden Ansprüche, **dadurch gekennzeichnet, dass** die Aussparungen (20) in regelmäßigen Abständen einseitig oder beidseitig am Unterteil (1) eingebracht sind.

6. Überbrückungsklammer nach einem der vorhergehenden Ansprüche, **dadurch gekennzeichnet, dass** am unteren Schenkel (32) des Rastprofils (33) eine Nase (19) ausgebildet ist.

7. Überbrückungsklammer nach einem der vorhergehenden Ansprüche, **dadurch gekennzeichnet, dass** das Halteprofil (13) einen Schenkel (38) umfasst, auf dem ein Zahn (15) ausgebildet ist, der mit einer Aussparung (20) kooperiert.

8. Überbrückungsklammer nach einem der vorhergehenden Ansprüche, **dadurch gekennzeichnet, dass** sich an der Unterseite der Überbrückungsklammer Versteifungsrippen (18) befinden.

9. Überbrückungsklammer nach einem der vorhergehenden Ansprüche, **dadurch gekennzeichnet**, das Rastprofil (33) an der Fußseite und der Kopfseite des Basiskörpers (10) ausgebildet ist.

10. Kabelführungskanal zur Aufnahme von Kabel und Leitungen, umfassend eine Überbrückungsklammer nach einem der Ansprüche 1 bis 9.

11. Kabelführungskanal nach Anspruch 10, **dadurch gekennzeichnet, dass** das mit dem Rastprofil (33) kooperierende Randprofil (4) des Unterteils (1) ein nach innen zur Kanalwand abgewinkelten Schenkel umfasst, der die Klammer gegen das Unterteil (1) abstützt.

12. Kabelführungskanal nach einem der vorhergehenden Ansprüche, **dadurch gekennzeichnet, dass** es sich um einen Wandkanal, Deckenkanal oder Raumsäule handelt.

## Claims

1. Bridging clip for securing cables and lines in cable guide channels, comprising
- a main body (10),
- a latching profile (33) which is formed on the foot side of the main body (10) and has a slot (12) made in it for fastening the clip to a bottom part (1) of a cable guide channel, wherein the latching profile (33) is formed by a lower limb (32) and an upper limb (34) of the main body (10),
- a retaining profile (13), which is formed on the head side of the main body (10), for supporting the clip against the bottom part (1) of the cable guide channel,
- a bar (17) which is formed either on the upper limb (34) or on the lower limb (32) of the latching profile (33) and which cooperates with a cutout (20) which is formed on the bottom part (1), wherein the bar (17) extends into the cutout (20) either from below or from above and the cutout (20) is formed on an edge profile (4) of the bottom part (1),
- the bridging clip has a groove on its longitudinal side, so that the clip can be laterally fastened to the edge profile (4) of the bottom part (1),
**characterized in that**, in the pivoted position, the clip can be moved along the cable channel into the assembly position and, when the clip is pushed down into the latching position, the bar (17) of the foot-side latching profile (33) extends into a cutout (20) in the web (8) of the edge profile (4), and **in that**, for latching on both sides in the locking position, a tooth (15) which is formed on the retaining profile (13) extends into a cutout (20) on the opposite side of the bottom part (1), and **in that** the retaining profile (13) cooperates with the edge profile (4) of the bottom part (1).

2. Bridging clip according to claim 1, **characterized in that** the bar (17) is located on the upper limb (34) of the main body (10) and extends into the cutout (20) in the bottom part (1) from above.

3. Bridging clip according to either of Claims 1 and 2, **characterized in that** the bar (17) is located on the lower limb (32) of the main body (10) and extends into the cutout (20) in the bottom part (1) from below.

4. Bridging clip according to one of the preceding claims, **characterized in that** the cutouts (20) are made in the cover retaining profiles (2) or in a web (8) of the edge profile (4).

5. Bridging clip according to one of the preceding claims, **characterized in that** the cutouts (20) are made in one side or both sides of the bottom part (1) at regular intervals.

6. Bridging clip according to one of the preceding claims, **characterized in that** a lug (19) is formed on the lower limb (32) of the latching profile (33).

7. Bridging clip according to one of the preceding claims, **characterized in that** the retaining profile (13) comprises a limb (38) on which a tooth (15) which cooperates with a cutout (20) is formed.

8. Bridging clip according to one of the preceding claims, **characterized in that** reinforcing ribs (18) are located on the bottom side of the bridging clip.

9. Bridging clip according to one of the preceding claims, **characterized in that** the latching profile (33) is formed on the foot side and on the head side of the main body (10).

10. Cable guide channel for receiving cables and lines, comprising a bridging clip according to one of Claims 1 to 9.

11. Cable guide channel according to Claim 10, **characterized in that** the edge profile (4) of the bottom part (1), which edge profile cooperates with the latching profile (33), comprises a limb which is bent inwards towards the channel wall and which supports the clip against the bottom part (1).

12. Cable guide channel according to either of the preceding claims, **characterized in that** it is a wall channel, ceiling channel or room pillar.

## Revendications

1. Bride de pontage destinée à la fixation de câbles et de conduites dans des canalisations de guidage de câbles, comprenant
- un corps de base (10),
- un profilé d'encliquetage (33) formé du côté pied du corps de base (10), dans lequel est ménagée une fente (12) pour la fixation de la bride à une partie inférieure (1) d'une canalisation de guidage de câbles, lequel profilé d'encliquetage (33) est formé d'une branche inférieure (32) et d'une branche supérieure (34) du corps de base (10),
- un profilé de retenue (13) formé du côté tête du corps de base (10) pour appuyer la bride contre la partie inférieure (1) de la canalisation de guidage de câbles,
- un verrou (17) formé soit sur la branche supérieure (34), soit sur la branche inférieure (32) du profilé de retenue (13), qui coopère avec un évidement (20) formé sur la partie inférieure (1), le verrou (17) s'engageant dans l'évidement (20) soit par le bas, soit par le haut, et l'évidement (20) étant formé sur un profilé de bord (4) de la partie inférieure (1),
- la bride de pontage présentant sur son côté longitudinal une rainure qui permet de fixer la bride latéralement avec le profilé de bord (4) de la partie inférieure (1),
**caractérisée en ce que** la bride dans la position pivotée peut être déplacée le long de la canalisation de câbles dans la position de montage et, lorsque l'on appuie sur la bride dans la position d'encliquetage, le verrou (17) du profilé d'encliquetage (33) côté pied s'engage dans un évidement (20) de l'aile (8) du profilé de bord (4) et que, pour l'encliquetage dans la position de verrouillage des deux côtés, une dent (15) formée sur le profilé de retenue (13) s'engage dans un évidement (20) du côté opposé de la partie inférieure (1), et que le profilé de retenue (13) coopère avec le profilé de bord (4) de la partie inférieure (1).

2. Bride de pontage selon la revendication 1, **caractérisée en ce que** le verrou (17) se trouve sur la branche supérieure (34) du corps de base (10) et s'engage par le haut dans l'évidement (20) de la partie inférieure (1).

3. Bride de pontage selon l'une des revendications 1 ou 2, **caractérisée en ce que** le verrou (17) se trouve sur la branche inférieure (32) du corps de base (10) et s'engage par le bas dans l'évidement (20) de la partie inférieure (1).

4. Bride de pontage selon l'une des revendications précédentes, **caractérisée en ce que** les évidements (20) sont ménagés sur les profilés de retenue de couvercle (2) ou sur une aile (8) du profilé de bord (4).

5. Bride de pontage selon l'une des revendications précédentes, **caractérisée en ce que** les évidements (20) sont ménagés à intervalles réguliers d'un côté ou des deux côtés sur la partie inférieure (1).

6. Bride de pontage selon l'une des revendications précédentes, **caractérisée en ce qu'**un ergot (19) est formé sur la branche inférieure (32) du profilé d'encliquetage (33).

7. Bride de pontage selon l'une des revendications précédentes, **caractérisée en ce que** le profilé de retenue (13) comprend une branche (38) sur laquelle est formée une dent (15) qui coopère avec un évidement (20).

8. Bride de pontage selon l'une des revendications précédentes, **caractérisée en ce que** des nervures de raidissement (18) se trouvent sur la face inférieure de la bride de pontage.

9. Bride de pontage selon l'une des revendications précédentes, **caractérisée en ce que** le profilé d'encliquetage (33) est formé du côté pied et du côté tête du corps de base (10).

10. Canalisation de guidage de câbles destiné à recevoir des câbles et des conduites, comprenant une bride de pontage selon l'une des revendications 1 à 9.

11. Canalisation de guidage de câbles selon la revendication 10, **caractérisée en ce que** le profilé de bord (4) de la partie inférieure (1) qui coopère avec le profilé d'encliquetage (33) comprend une branche repliée vers l'intérieur en direction de la paroi de canalisation, qui appuie la bride contre la partie inférieure (1).

12. Canalisation de guidage de câbles selon l'une des revendications précédentes, **caractérisée en ce qu'**il s'agit d'une canalisation murale, d'une canalisation de plafond ou d'une colonne.
